# EUROPÄISCHE PATENTSCHRIFT

(11) **EP 1 356 533 B1**
(45) Veröffentlichungstag und Bekanntmachung des Hinweises auf die Patenterteilung: **21.07.2004**
(21) Anmeldenummer: 02702221.9
(22) Anmeldetag: 30.01.2002
(51) Int. Cl.: H01M 8/04

(54) **BRENNSTOFFZELLEN MIT INTEGRIERTER BEFEUCHTUNG SOWIE VERFAHREN ZUM BEFEUCHTEN VON BRENNSTOFFZELLEN-PROZESSGAS**
FUEL CELLS WITH INTEGRATED HUMIDIFICATION AND METHOD FOR HUMIDIFYING FUEL CELL PROCESS GAS
PILES A COMBUSTIBLE COMPORTANT UNE HUMIDIFICATION INTEGREE ET PROCEDE D'HUMIDIFICATION DE GAZ DE PROCESSUS DE PILES A COMBUSTIBLE

(30) Priorität: 31.01.2001 DE 10104246
(43) Veröffentlichungstag der Anmeldung: 29.10.2003
(73) Patentinhaber: Viessmann Werke GmbH & Co, 35107 Allendorf (DE)
(72) Erfinder: SCHOLTA, Joachim, 89278 Nersingen (DE); JÖRRISEN, Ludwig, 89231 Neu-Ulm (DE); GAUGLER, Bernd, 89075 Ulm (DE)
(74) Vertreter: Wolf, Günter, Dipl.-Ing.
(86) Internationale Anmeldenummer: PCT/DE2002/000334
(87) Internationale Veröffentlichungsnummer: WO 2002/061867

(56) Entgegenhaltungen:
- DE-A- 19 741 331
- DE-A- 19 918 850
- DE-A- 19 929 472
- US-A- 6 045 934
- PATENT ABSTRACTS OF JAPAN vol. 2000, no. 12, 3. Januar 2001 (2001-01-03) -& JP 2000 260456 A (SANYO ELECTRIC CO LTD), 22. September 2000 (2000-09-22)
- PATENT ABSTRACTS OF JAPAN vol. 2000, no. 14, 5. März 2001 (2001-03-05) -& JP 2000 311699 A (SANYO ELECTRIC CO LTD), 7. November 2000 (2000-11-07)
- PATENT ABSTRACTS OF JAPAN vol. 1997, no. 11, 28. November 1997 (1997-11-28) -& JP 09 180743 A (FUJI ELECTRIC CO LTD), 11. Juli 1997 (1997-07-11)
- PATENT ABSTRACTS OF JAPAN vol. 2000, no. 24, 11. Mai 2001 (2001-05-11) -& JP 2001 196075 A (MATSUSHITA SEIKO CO LTD), 19. Juli 2001 (2001-07-19)
- PATENT ABSTRACTS OF JAPAN vol. 2002, no. 08, 5. August 2002 (2002-08-05) -& JP 2002 117881 A (HONDA MOTOR CO LTD), 19. April 2002 (2002-04-19)

## Beschreibung

### 1. Feld der Erfindung

Die Erfindung betrifft Brennstoffzellen mit integrierter Befeuchtung sowie Verfahren zum Befeuchten von Prozeßgas für den Betrieb einer Brennstoffzelle.

Brennstoffzellen sind aufgrund ihres hohen Wirkungsgrades und ihrer niedrigen Schadstoff- und Geräuschemissionen zur unabhängigen Stromerzeugung in kleineren und mittleren Einheiten, für Traktionsanwendungen sowie zur kombinierten Strom- und Wärmeerzeugung sehr gut geeignet.

Um ein Austrocknen der Elektrolytmembran zu vermeiden, ist es bei Brennstoffzellen, insbesondere solchen mit protonenleitenden Elektrolytmembranen bzw. Polymer-Elektrolyt-Membranen (PEM Zellen) notwendig, dass die Prozeßgase, das heißt O₂-haltiges Gas für die Kathodenseite und H₂-haltiges Brenngas für die Anodenseite, befeuchtet werden. Zur Befeuchtung der Prozeßgase von Brennstoffzellen sind bereits zahlreiche Verfahren vorgeschlagen worden.

### 2. Beschreibung des Standes der Technik

Die EP 0 629 014 B1 beschreibt ein Verfahren und eine Vorrichtung zur Befeuchtung von Prozeßgas für den Betrieb von Brennstoffzellen, bei dem über eine externe Versorgungsleitung Wasser durch eine feinzerstäubende Düse in das Prozeßgas eingespritzt wird. Die Wassermenge wird hierbei in Abhängigkeit von der zu befeuchtenden Gasmenge und der Temperatur durch ein in der Versorgungsleitung angeordnetes Dosierventil eingestellt.

In EP 0 301 757 A2 wird eine Brennstoffzelle mit einer ionenleitenden Elektrolytmembran beschrieben, bei der über eine externe Versorgungsleitung Wasser in die Anodenseite eingedüst wird, um die Brennstoffzelle zu befeuchten und zu kühlen.

Die JP 07 176 313 A beschreibt eine Anordnung aus einer Brennstoffzelle und einem Wärmetauscher, in welchem aus einer externen Versorgungsleitung zugeführtes Wasser durch die der Abluft der Zelle entzogenen Wärme verdampft wird und damit die der Zelle zuzuführende Luft befeuchtet wird.

Die US-A-6,106,964 beschreibt eine Anordnung aus einer PEM-Brennstoffzelle und einem kombinierten Wärme- und Feuchtigkeitsaustauscher, der eine Prozeßgaszuführkammer und eine Prozeßabgaskammer umfaßt, welche durch eine wasserpermeable Membran getrennt sind. Hierbei werden Wasser und Wärme aus dem Prozeßabgasstrom auf den Prozeßgaszuführstrom über die wasserpermeable Membran übertragen. Zwar wird bei dieser Anordnung Produktwasser direkt zur Befeuchtung der Zelle eingesetzt. Es ist jedoch schwierig bzw. unmöglich, den Rückführungsanteil des Produktwassers zu regulieren. Ferner werden im Produktwasser enthaltene Verunreinigungen, wie Metallionen, ständig im Kreislauf geführt, was bei einem längeren Betrieb zu Beeinträchtigungen der Zelle und der wasserpermeablen Membran führen kann.

### Gegenstände und Zusammenfassung der Erfindung

Der Erfindung liegt daher die Aufgabe zugrunde, eine Brennstoffzelle mit integrierter Befeuchtung vorzusehen, welche keine externen Wasserzuführsysteme und Dosiereinrichtungen benötigt und dennoch eine erhöhte Betriebssicherheit bei geringstmöglichem Zusatzwärmebedarf der Brennstoffzelle ermöglicht. Ferner soll ein einfaches Verfahren zum Befeuchten von Prozeßgas für den Betrieb einer solchen Brennstoffzelle angegeben werden.

Diese Aufgabe wird durch Brennstoffzellen gemäß den Ansprüchen 1 und 2 sowie Verfahren gemäß den Ansprüchen 9 und 10 gelöst. Vorteilhafte bzw. bevorzugte Ausführungsformen des Anmeldungsgegenstandes sind in den Unteransprüchen angegeben.

Gegenstand der Erfindung ist daher gemäß einer ersten Ausführungsform eine Brennstoffzelle mit integrierter Befeuchtung, umfassend
- eine Brennstoffzellen-Einheit mit einer Anode, einer Polymer-Elektrolyt-Membran (PEM) und einer Kathode,
- eine Zuführleitung für O₂-haltiges Gas, vorzugsweise Luft, zur Kathode,
- eine Abführleitung für wasserdampfhaltiges Kathodenabgas,
- eine Zuführleitung für H₂-haltiges Brennstoffgas zur Anode,
- eine Abführleitung für wasserdampfhaltiges Anodenabgas,
- eine erste Befeuchtungseinheit für das O₂-haltige Gas und/oder eine zweite Befeuchtungseinheit für das H₂-haltige Brennstoffgas, wobei die erste Befeuchtungseinheit umfaßt
   einen ersten Wärmetauscher, durch welchen die Zuführleitung für O₂-haltiges Gas und die Abführleitung für wasserdampfhaltiges Kathodenabgas geführt werden, wobei die Abführleitung stromabwärts des ersten Wärmetauschers mit der Zuführleitung stromaufwärts des ersten Wärmetauschers über einen ersten Kondensatabscheider und ein erstes Kapillarrohr verbunden ist und das erste Kapillarrohr in eine in der Zuführleitung installierte Venturi-Düse und/oder in eine in der Zuführleitung installierte Pumpe mündet,
- und/oder die zweite Befeuchtungseinheit umfaßt
   einen zweiten Wärmetauscher, durch welchen die Zuführleitung für H₂-haltiges Brennstoffgas und die Abführleitung für wasserdampfhaltiges Anodenabgas geführt werden, wobei die Abführleitung stromabwärts des zweiten Wärmetauschers mit der Zuführleitung stromaufwärts des zweiten Wärmetauschers über einen zweiten Kondensatabscheider und ein zweites Kapillarrohr verbunden ist und das zweite Kapillarrohr in eine in der Zuführleitung installierte Venturi-Düse und/oder in eine in der Zuführleitung installierte Pumpe mündet.

Gegenstand der Erfindung ist ebenso ein Verfahren zum Befeuchten von Prozeßgas für den Betrieb einer solchen Brennstoffzelle, bei dem das O₂-haltige Gas für die Kathode durch das wasserdampfhaltige Kathodenabgas über die erste Befeuchtungseinheit und/oder das H₂-haltige Brennstoffgas für die Anode durch das wasserdampfhaltige Anodenabgas über die zweite Befeuchtungseinheit befeuchtet werden.

Gegenstand der Erfindung ist gemäß einer zweiten Ausführungsform weiterhin eine Brennstoffzelle mit integrierter Befeuchtung, umfassend
- eine Brennstoffzellen-Einheit mit einer Anode, einer Polymer-Elektrolyt-Membran (PEM) und einer Kathode,
- eine Zuführleitung für O₂-haltiges Gas, vorzugsweise Luft, zur Kathode,
- eine Abführleitung für wasserdampfhaltiges Kathodenabgas,
- eine Zuführleitung für H₂-haltiges Brennstoffgas zur Anode,
- eine Abführleitung für wasserdampfhaltiges Anodenabgas,
- eine erste Befeuchtungseinheit für das O₂-haltige Gas und/oder eine zweite Befeuchtungseinheit für das H₂-haltige Brennstoffgas, wobei die erste Befeuchtungseinheit umfaßt
   einen ersten Wärmetauscher, durch welchen die Zuführleitung für H₂-haltiges Brennstoffgas und die Abführleitung für wasserdampfhaltiges Kathodenabgas geführt werden, wobei die Abführleitung stromabwärts des ersten Wärmetauschers mit der Zuführleitung stromaufwärts des ersten Wärmetauschers über einen ersten Kondensatabscheider und ein erstes Kapillarrohr verbunden ist und das erste Kapillarrohr in eine in der Zuführleitung installierte Venturi-Düse und/oder in eine in der Zuführleitung installierte Pumpe mündet,
- und/oder die zweite Befeuchtungseinheit umfaßt
   einen zweiten Wärmetauscher, durch welchen die Zuführleitung für O₂-haltiges Gas und die Abführleitung für wasserdampfhaltiges Anodenabgas geführt werden, wobei die Abführleitung stromabwärts des zweiten Wärmetauschers mit der Zuführleitung stromaufwärts des zweiten Wärmetauschers über einen zweiten Kondensatabscheider und ein zweites Kapillarrohr verbunden ist und das zweite Kapillarrohr in eine in der Zuführleitung installierte Venturi-Düse und/oder in eine in der Zuführleitung installierte Pumpe mündet.

Gegenstand der Erfindung ist schließlich ein Verfahren zum Befeuchten von Prozeßgas für den Betrieb einer solchen Brennstoffzelle, bei dem das H₂-haltige Brennstoffgas für die Anode durch das wasserdampfhaltige Kathodenabgas über die erste Befeuchtungseinheit und/oder das O₂-haltige Gas für die Kathode durch das wasserdampfhaltige Anodenabgas über die zweite Befeuchtungseinheit befeuchtet werden.

Die Erfindung nutzt die Tatsache aus, dass die Brennstoffzelle an der Kathodenseite als auch an der Anodenseite ausreichend Wasser produziert, um eine kathodeneingangsseitige als auch anodeneingangsseitige Befeuchtung unter allen Betriebsbedingungen zu gewährleisten, soweit das gebildete Produktwasser dem Kathodenabgasstrom bzw. Anodenabgasstrom entzogen werden kann.

Desweiteren wird gemäß der Erfindung zur hilfsaggregatfreien Rückführung von Produktwasser die Tatsache ausgenutzt, dass mittels einer Venturi-Düse die Druckdifferenz, welche sich zwischen dem Wärmetauschereingang vor und dem Wärmetauscherausgang nach der Brennstoffzelle einstellt, überwunden werden kann. Auf diese Weise erfolgt eine kontinuierliche Rückführung des Produktwassers über die Prozeßgase der Brennstoffzelle, wodurch eine ausreichende Befeuchtung der Elektrolytmembran gewährleistet wird. Der Rückführungsanteil des gebildeten Produktwassers kann durch den gewählten Prozeßgasumsatzgrad sowie durch die Auslegung der Wärmetauscher bestimmt werden.

Sollte die über die Venturi-Düse aufbringbare Druckdifferenz für den aus Wärmetauscher, Brennstoffzellen-Einheit und Wärmetauscher bestehenden Kreislauf nicht ausreichend sein, kann anstelle der Venturi-Düse oder zusätzlich zu dieser eine Pumpe installiert werden, in welche das jeweilige Kapillarrohr mündet.

Gemäß der ersten Ausführungsform der Erfindung kann entweder nur die erste Befeuchtungseinheit für die Kathodenseite oder nur die zweite Befeuchtungseinheit für die Anodenseite vorgesehen sein. Vorzugsweise erfolgt der Betrieb jedoch mit beiden Befeuchtungseinheiten. Sollte nur eine Befeuchtungseinheit vorgesehen sein, so ist es bevorzugt, die erste Befeuchtungseinheit für die Kathodenseite einzusetzen, da die Menge des Produktwassers an der Kathodenseite größer ist als an der Anodenseite. Gemäß der zweiten Ausführungsform der Erfindung kann entweder nur die erste Befeuchtungseinheit für das H₂-haltige Brennstoffgas oder nur die zweite Befeuchtungseinheit für das O₂-haltige Gas vorgesehen sein. Vorzugsweise erfolgt der Betrieb jedoch mit beiden Befeuchtungseinheiten. Sollte nur eine Befeuchtungseinheit vorgesehen sein, so ist es bevorzugt, die erste Befeuchtungseinheit für das H₂-haltige Brennstoffgas vorzusehen, da die Menge des durch das Kathodenabgas zugeführten Produktwassers größer ist als im Falle des Anodenabgases. Ein positiver Nebeneffekt bei der zuletzt genannten Alternative besteht darin, dass mit dem Kathodenabgas dem H₂-haltigen Brennstoffgas geringe Mengen Sauerstoff zugeführt werden, die dazu dienen können, im Brennstoffgas in geringen Anteilen vorliegendes CO, das als Katalysatorgift wirkt, durch eine an der Anode vorhandene, herkömmliche CO-selektive Katalysatorschicht zu unschädlichem CO₂ zu oxidieren. Zur Regelung der hierfür benötigten Sauerstoffmenge können gegebenenfalls weitere Hilfseinrichtungen vorgesehen werden.

Dadurch, dass gemäß der Erfindung das Produktwasser der Brennstoffzelle direkt eingesetzt wird und nicht Wasser aus einer externen Versorgungseinheit zugeführt werden muss, werden gegenüber der herkömmlichen Betriebsweise, bei der externe Wasser-Versorgungsleitungen installiert sind, zwei wesentliche Verbesserungen erreicht: Zum ersten entfällt die Notwendigkeit einer Dosiereinrichtung, welche in Abhängigkeit von dem jeweiligen Betriebszustand eine genau bestimmte Menge Wasser einspritzen muss, da nach dem erfindungsgemäß beschriebenen Prinzip immer ein konstanter Bruchteil des Produktwassers zudosiert wird und damit die Notwendigkeit einer zusätzlichen Regelung entfällt. Wahlweise können die erfindungsgemäß vorgesehenen Befeuchtungseinheiten dennoch eine Regeleinrichtung, wie eine Dosierpumpe, umfassen, um die Menge des den Zuführleitungen zuzuführenden Kondensatwassers noch exakter dosieren zu können.

Zum zweiten können gemäß der Erfindung externe Vorratsbehälter und Zuführleitungen für Wasser entfallen, so dass die Brennstoffzelle ohne die Notwendigkeit der Zudosierung von externem Wasser kontinuierlich betrieben werden kann.

Gegenüber dem in der US-A-6,106,964 beschriebenen Stand der Technik der Verwendung einer wasserpermeablen Membran zur Befeuchtung der Prozeßgase besitzt das erfindungsgemäße Prinzip den Vorteil, dass der Rückführungsanteil des Produktwassers zu der Zelle in einfacher Weise variiert werden kann, beispielsweise durch Regelung der Druckdifferenzen vor und nach der Venturi-Düse, wie etwa durch Änderung der Strömungsgeschwindigkeiten der Prozeßgase oder durch Variation der Venturi-Düse, durch Variation des Durchmessers der Kapillarrohre, welche geeigneterweise einen Innendurchmesser von 0,2 bis 10 mm, vorzugsweise 1 bis 4 mm, aufweisen können, oder durch Auslegung der Wärmetauscher, etwa durch Variation der Wärmetauscherfläche. Desweiteren ist es gegenüber diesem Stand der Technik möglich, das als Kondensat anfallende Produktwasser durch Vorsehen einer Reinigungseinheit zu reinigen bzw. zu entionisieren, beispielsweise dadurch, dass eine Demineralisierungspatrone für das Kondensatwasser vorgesehen wird. Dadurch gelingt es, zusätzlich zur Befeuchtung mittels Produktwasser das Brennstoffzellensystem schädigende Verunreinigungen, wie Metallionen, aus dem im Kreislauf geführten Produktwasser zu entfernen.

Abgesehen von den erfindungsgemäß vorgesehenen Befeuchtungseinheiten sind die weiteren Komponenten der Brennstoffzelle von üblicher Bauart und Auslegung. So kann die Brennstoffzelle wahlweise einen mit der Brennstoffzellen-Einheit verbundenen Kühlmittelkreislauf mit einem weiteren Wärmetauscher und einer Pumpe zum Rezirkulieren von Kühlmittel umfassen, um die kombinierte Strom- und Wärmeerzeugung der Zelle zu nutzen.

Die Brennstoffzellen-Einheit ist üblicherweise ein Brennstoffzellen-Stack, der eine Vielzahl von Brennstoffeinzelzellen umfaßt.

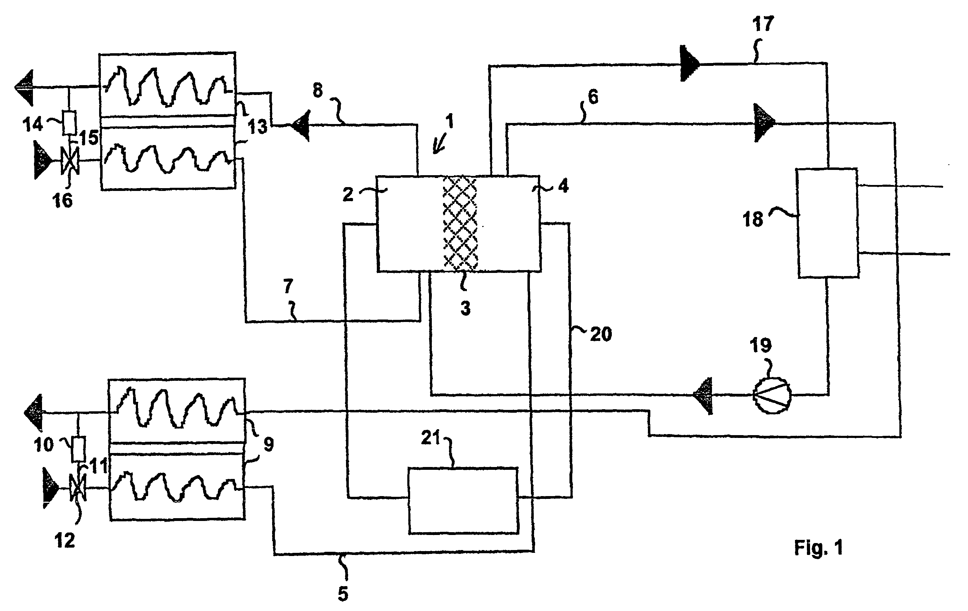

Die Erfindung wird durch die beiliegende Zeichnung näher erläutert, wobei Figur 1 schematisch das Schaltbild einer ersten Ausführungsform einer erfindungsgemäßen Brennstoffzelle mit integrierter Befeuchtung zeigt. Unter Bezugnahme auf Figur 1 zeigt 1 eine Brennstoffzellen-Einheit mit einer Anode 2, einer Polymer-Elektrolyt-Membran 3 und einer Kathode 4, eine Zuführleitung 5 für O₂-haltiges Gas, vorzugsweise Luft, eine Abführleitung 6 für wasserdampfhaltiges Kathodenabgas, eine Zuführleitung 7 für H₂-haltiges Brennstoffgas und eine Abführleitung 8 für wasserdampfhaltiges Anodengas. Gemäß der hier gezeigten Ausführungsform ist sowohl eine erste Befeuchtungseinheit mit einem ersten Wärmetauscher 9, einem ersten Kondensatabscheider 10 und einem ersten Kapillarrohr 11 sowie einer in der Zuführleitung 5 installierten Venturi-Düse 12, sowie eine zweite Befeuchtungseinheit mit einem zweiten Wärmetauscher 13, einem zweiten Kondensatabscheider 14 und einem zweiten Kapillarrohr 15 sowie einer in der Zuführleitung 7 installierten Venturi-Düse 16 vorgesehen. Bei beiden Wärmetauschern 9, 13, handelt es sich vorzugsweise um im Gegenstrom arbeitende Wärmetauscher, weiter vorzugsweise um Plattenwärmetauscher mit einer Wärmetauscherfläche von beispielsweise 0,05 bis 2 m² / 100 1 durchströmendem Gas/min.

Die Prozeßgasströme werden derart geführt, dass das zu befeuchtende Gas durch die Venturi-Düse geführt und in dieser mit dem von dem Kondensatabscheider kommenden Produktwasser vermischt wird. Danach strömt das entstandene Gas-Wasser-Gemisch durch den Wärmetauscher, wobei dort die zur Verdampfung des Wassers in dem Gas-Wasser-Gemisch notwendige Wärmeenergie zugeführt wird. Das so befeuchtete Prozeßgas strömt anschliessend durch die Brennstoffzelle, wird dort mit weiterer Feuchtigkeit in Form von Produktwasser angereichert, teilweise umgesetzt, und strömt anschließend in Gegenrichtung durch den jeweiligen Wärmetauscher. Dort wird durch Abkühlung das Abgas kondensiert unter Freisetzung des thermischen Energieinhaltes sowie der Kondensationswärme.

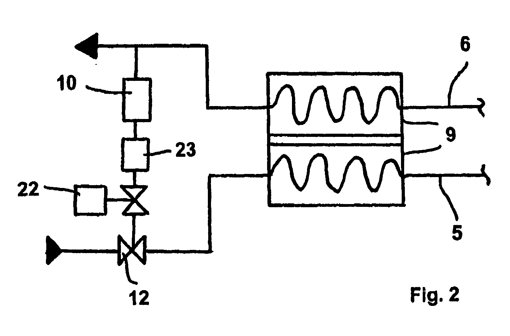

Nach Passieren des Wärmetauschers wird das resultierende, abgekühlte Gas-Wasser-Gemisch in dem Kondensatabscheider 10, 14 getrennt, mittels der Reinigungseinheiteinheit 23 (siehe Figur 2, vorzugsweise eine Demineralisierungspatrone) gereinigt, und das Kondensatwasser zusammen mit einem kleinen Abgasanteil durch den in der Venturi-Düse anstehenden Unterdruck dem zuströmenden Prozeßgas zugeführt. Der Befeuchtungsgrad des zuströmenden Prozeßgases kann beispielsweise durch eine Auslegung der Wärmetauscherfläche oder durch Einstellung der Strömungsgeschwindigkeit der Prozeßgase gewählt bzw. variient werden.

Beispielsweise können die Befeuchtungseinheiten auch, wie in Figur 2 dargestellt, eine Regeleinrichtung 22 umfassen, um die Menge des den Zuführleitungen 5, 7 zuzuführenden Kondensatwassers dosieren zu können.

Bei der gezeigten Ausführungsform ist weiterhin ein Kühlmittelkreislauf 17 mit einem Wärmetauscher 18 und einer Pumpe 19 zum Rezirkulieren von Kühlmittel vorgesehen. Der in der Brennstoffzelle erzeugte Strom wird über den Stromkreislauf 20 einem Wechselrichter 21 zur Lastabnahme zugeführt.

### Beispiel

Gemäß der in Figur 1 gezeigten Anordnung wird eine Brennstoffzelle mit einer Befeuchtungseinheit nur auf der Kathodenseite aufgebaut und das System mit den in der nachfolgenden Tabelle 1 wiedergegebenen Daten hinsichtlich des Feuchtegehaltes der Kathodengase betrieben.

**Tabelle 1:**

| Feuchtegehalte bei integrierter Kathodenbefeuchtung | | | | | | | | |
|---|---|---|---|---|---|---|---|---|
| | Primärseite = Abluftseite BZ | | | | | | | |
| Strömungsgeschwindigkeit (l/min) | T ein (°C) | r.F. ein (%) | TP ein (°C) | T aus (°C) | r.F. aus (%) | TP aus (°C) | Δ p 1,2 Rohr (mbar) | Δ p 2,3 Nutz (mbar) |
| 100 | 59,7 | 100 | 59,7 | 38,4 | 100 | 38,4 | 19,7 | 29,4 |
| 150 | 69,7 | 53,5 | 55,9 | 45,5 | 98,2 | 45,2 | 54 | 63 |
| 150 | 61,3 | 100 | 61,3 | 51,7 | 100 | 51,7 | 54 | 63 |

| | Sekundärseite = Zuluftseite BZ | | | | | | | |
|---|---|---|---|---|---|---|---|---|
| Strömungsgeschwindigkeit (l/min) | T ein (°C) | r.F. ein (%) | TP ein (°C) | T aus (°C) | r.F. aus (%) | TP aus (°C) | | |
| 100 | 19,1 | 12,9 | -8,9 | 54 | 67,6 | 46,1 | | |
| 150 | 22,6 | 13,1 | -6,3 | 46,3 | 60,1 | 36,7 | | |
| 150 | 22,6 | 13,1 | -6,3 | 36,1 | 99,1 | 35,9 | | |

In der Tabelle bedeuten:
- BZ:: Brennstoffzelle
- T ein:: Temperatur eingangsseitig
- r.F. ein:: relative Feuchtigkeit eingangsseitig
- TP ein:: Taupunkt eingangsseitig
- T aus:: Temperatur ausgangsseitig
- r.F. aus:: relative Feuchtigkeit ausgangsseitig
- TP aus:: Taupunkt ausgangsseitig
- Δ p 1/2 Rohr:: Durckdifferenz in der Kathodengaszuführleitung vor und nach der Venturi-Düse
- Δ p 2/3 Nutz:: Druckdifferenz zwischen Kapillarrohr und Austritt Venturi-Düse

Wie der Tabelle zu entnehmen ist, kann bei der hier realisierten Wärmetauscherauslegung (0,22 m² Wärmetauscherfläche) je nach gefahrener Luftmenge bei einem brennstoffzellenseitigen Ausgangs-Taupunkt von etwa 60°C ein eingangsseitiger Taupunkt zwischen etwa 36 und 46°C eingestellt werden.

### Bezugszeichenliste

- 1: Brennstoffzelle
- 2: Anode
- 3: Polymer-Elektrolyt-Membran
- 4: Kathode
- 5: Zuführleitung
- 6: Abführleitung
- 7: Zuführleitung
- 8: Abführleitung
- 9: Wärmetauscher
- 10: Kondensatabscheider
- 11: Kapillarrohr
- 12: Venturi-Düse
- 13: Wärmetauscher
- 14: Kondensatabscheider
- 15: Kapillarrohr
- 16: Venturi-Düse
- 17: Kühlmittelkreislauf
- 18: Wärmetauscher
- 19: Pumpe
- 20: Stromkreislauf
- 21: Wechselrichter
- 22: Regeleinrichtung
- 23: Reinigungseinheit

## Patentansprüche

1. Brennstoffzelle mit integrierter Befeuchtung, umfassend
eine Brennstoffzellen-Einheit (1) mit einer Anode (2),
einer Polymer-Elektrolyt-Membran (PEM) (3) und einer Kathode (4),
eine Zuführleitung (5) für O₂-haltiges Gas, vorzugsweise Luft, zur Kathode,
eine Abführleitung (6) für wasserdampfhaltiges Kathodenabgas,
eine Zuführleitung (7) für H₂-haltiges Brennstoffgas zur Anode,
eine Abführleitung (8) für wasserdampfhaltiges Anodenabgas,
eine erste Befeuchtungseinheit für das O₂-haltige Gas und/oder eine zweite Befeuchtungseinheit für das H₂-haltige Brennstoffgas, wobei die erste Befeuchtungseinheit umfaßt
einen ersten Wärmetauscher (9), durch welchen die Zuführleitung (5) für O₂-haltiges Gas und die Abführleitung (6) für wasserdampfhaltiges Kathodenabgas geführt werden, wobei die Abführleitung (6) stromabwärts des ersten Wärmetauschers (9) mit der Zuführleitung (5) stromaufwärts des ersten Wärmetauschers (9) über einen ersten Kondensatabscheider (10) und ein erstes Kapillarrohr (11) verbunden ist und das erste Kapillarrohr (11) in eine in der Zuführleitung (5) installierte Venturi-Düse (12) und/oder in eine in der Zuführleitung (5) installierte Pumpe (12) mündet,
und/oder die zweite Befeuchtungseinheit umfaßt
einen zweiten Wärmetauscher (13), durch welchen die Zuführleittung (7) für H₂-haltiges Brennstoffgas und die Abführleitung (8) für wasserdampfbaltiges Anodenabgas geführt werden, wobei die Abführleitung (8) stromabwärts des zweiten Wärmetauschers (13) mit der Zuführleitung (7) stromaufwärts des zweiten Wärmetauschers (13) über einen zweiten Kondensatabscheider (14) und ein zweites Kapillarrohr (15) verbunden ist und das zweite Kapillarrohr (15) in eine in der Zuführleitung (7) installierte Venturi-Düse und/oder in eine in der Zuführleitung (7) installierte Pumpe (16) mündet.

2. Brennstoffzelle mit integrierter Befeuchtung, umfassend
eine Brennstoffzellen-Einheit (1) mit einer Anode (2),
einer Polymer-Elektrolyt-Membran (PEM) (3) und einer Kathode (4),
eine Zuführleitung (5) für O₂-haltiges Gas, vorzugsweise Luft, zur Kathode,
eine Abführleitung (6) für wasserdampfhaltiges Kathodenabgas,
eine Zuführleitung (7) für H₂-haltiges Brennstoffgas zur Anode,
eine Abführleitung (8) für wasserdampfhaltiges Anodenabgas,
eine erste Befeuchtungseinheit für das O₂-haltige Gas und/oder eine zweite Befeuchtungseinheit für das H₂-haltige Brennstoffgas, wobei die erste Befeuchtungseinheit umfaßt
einen ersten Wärmetauscher, durch welchen die Zuführleitung (7) für H₂-haltiges Brennstoffgas und die Abführleitung (6) für wasserdampfhaltiges Kathodenabgas geführt werden, wobei die Abführleitung (6) stromabwärts des ersten Wärmetauschers mit der Zuführleitung (7) stromaufwärts des ersten Wärmetauschers über einen ersten Kondensatabscheider und ein erstes Kapillarrohr verbunden ist und das erste Kapillarrohr in eine in der Zuführleitung (7) installierte Venturi-Düse (16) und/oder in eine in der Zuführleitung (7) installierte Pumpe (16) mündet,
und/oder die zweite Befeuchtungseinheit umfaßt
einen zweiten Wärmetauscher, durch welchen die Zuführleitung (5) für O₂-haltiges Gas und die Abführleitung (8) für wasserdampfhaltiges Anodenabgas geführt werden, wobei die Abführleitung (8) stromabwärts des zweiten Wärmetauschers mit der Zuführleitung (5) stromaufwärts des zweiten Wärmetauschers über einen zweiten Kondensatabscheider und ein zweites Kapillarrohr verbunden ist und das zweite Kapillarrohr in eine in der Zuführleitung (5) installierte Venturi-Düse und/oder in eine In der Zuführleitung (5) Installierte Pumpe (12) mündet.

3. Brennstoffzelle nach Anspruch 1 oder 2, umfassend weiterhin einen mit der Brennstoffzellen-Einheit (1) verbundenen Kühlmittelkreislauf (17) mit einem Wärmetauscher (18) und einer Pumpe (19) zum Rezierkulieren von Kühlmittel.

4. Brennstoffzelle nach mindestens einem Ansprüche 1 bis 3, wobei die Brennstoffzellen-Einheit (1) ein Brennstoffzellen-Stack ist, der eine Vielzahl von Brennstoffeinzelzellen umfaßt.

5. Brennstoffzelle nach mindestens einem der Ansprüche 1 bis 4, wobei die Kapillarrohre (11, 15) einen Innendurchmesser von 0,2 bis 10 mm, vorzugsweise 1 bis 4 mm, aufweisen.

6. Brennstoffzelle nach mindestens einem der Ansprüche 1 bis 5, wobei die Befeuchtungseinheiten eine Regeleinrichtung (22) umfassen, um die Menge des den Zuführleitungen (5, 7) zuzuführenden Kondensatwassers dosieren zu können.

7. Brennstoffzelle nach mindestens einem der Ansprüche 1 bis 6, wobei in den Befeuchtungseinheiten eine Reinigungseinheit (23) vorgesehen ist, um das Kondensatwasser zu reinigen bzw. zu entionisieren.

8. Brennstoffzelle nach Anspruch 7, wobei es sich bei der Reinigungseinheit (23) um eine Demineralisierungspatrone handelt.

9. Verfahren zum Befeuchten von Prozeßgas für den Betrieb einer Brennstoffzelle wie in Anspruch 1 definiert, bei dem das O₂-haltige Gas für die Kathode durch das wasserdampfhaltige Kathodenabgas über die erste Befeuchtungseinheit und/oder das H₂-haltige Brennstoffgas für die Anode durch das wasserdampfhaltige Anodenabgas über die zweite Befeuchtungseinheit befeuchtet werden.

10. Verfahren zum Befeuchten von Prozeßgas für den Betrieb einer Brennstoffzelle wie in Anspruch 2 definiert, bei dem das H₂-haltige Brennstoffgas für die Anode durch das wasserdampfhaltige Kathodenabgas über die erste Befeuchtungseinheit und/oder das O₂-haltige Gas für die Kathode durch das wasserdampfhaltige Anodenabgas über die zweite Befeuchtungseinheit befeuchtet werden.

## Claims

1. A fuel cell with integrated humidification, comprising
a fuel cell unit (1) with an anode (2),
a polymer electrolyte membrane (PEM) (3) and a cathode (4),
a feed line (5) to the cathode for gas containing O₂, preferably air,
a discharge line (6) for cathode waste gas containing water vapor,
a feed line (7) to the anode for fuel gas containing H₂,
a discharge line (8) for anode waste gas containing water vapor,
a first humidification unit for the gas containing O₂ and/or a second humidification unit for the fuel gas containing H₂, whereby the first humidification unit comprises
a first heat exchanger (9) through which the feed line (5) for gas containing O₂ and the discharge line (6) for cathode waste gas containing water vapor are guided, whereby the discharge line (6) downstream of the first heat exchanger (9) is connected to the feed line (5) upstream of the first heat exchanger (9) through a first condensate separator (10) and a first capillary tube (11) and the first capillary tube (11) runs into a Venturi nozzle (12) installed in the feed line (5) and/or a pump (12) installed in the feed line (5),
and/or the second humidification unit comprises
a second heat exchanger (13) through which the feed line (7) for fuel gas containing H₂ and the discharge line (8) for anode waste gas containing water vapor are guided, whereby the discharge line (8) downstream of the second heat exchanger (13) is connected to the feed line (7) upstream of the second heat exchanger (13) through a second condensate separator (14) and a second capillary tube (15) and the second capillary tube (15) runs into a Venturi nozzle installed in the feed line (7) and/or a pump (16) installed in the feed line (7).

2. A fuel cell with integrated humidification, comprising
a fuel cell unit (1) with an anode (2),
a polymer electrolyte membrane (PEM) (3) and a cathode (4),
a feed line (5) to the cathode for gas containing O₂, preferably air,
a discharge line (6) for cathode waste gas containing water vapor,
a feed line (7) to the anode for fuel gas containing H₂,
a discharge line (8) for anode waste gas containing water vapor,
a first humidification unit for the gas containing O₂ and/or a second humidification unit for the fuel gas containing H₂, whereby the first humidification unit comprises
a first heat exchanger through which the feed line (7) for fuel gas containing H₂ and the discharge line (6) for cathode waste gas containing water vapor are guided, whereby the discharge line (6) downstream of the first heat exchanger is connected to the feed line (7) upstream of the first heat exchanger through a first condensate separator and a first capillary tube and the first capillary tube runs into a Venturi nozzle (16) installed in the feed line (7) and/or a pump (16) installed in the feed line (7),
and/or the second humidification unit comprises
a second heat exchanger through which the feed line (5) for gas containing O₂ and the discharge line (8) for anode waste gas containing water vapor are guided, whereby the discharge line (8) downstream of the second heat exchanger is connected to the feed line (5) upstream of the second heat exchanger through a second condensate separator and a second capillary tube and the second capillary tube runs into a Venturi nozzle installed in the feed line (5) and/or a pump (12) installed in the feed line (5).

3. The fuel cell in accordance with claim 1 or 2, comprising furthermore a coolant cycle (17) connected to the fuel cell unit (1), having a heat exchanger (18) and a pump (19) to recirculate coolant.

4. The fuel cell in accordance with at least one of the claims 1 to 3, whereby the fuel cell unit (1) is a fuel cell stack comprising a plurality of single fuel cells.

5. The fuel cell in accordance with at least one of the claims 1 to 4, whereby the capillary tubes (11, 15) have an interior diameter of 0.2 to 10 mm, preferably 1 to 4 mm.

6. The fuel cell in accordance with at least one of the claims 1 to 5, whereby the humidification units comprise a control system (22) to dose the quantity of the condensate water to be supplied to the feed lines (5, 7).

7. The fuel cell in accordance with at least one of the claims 1 to 6, whereby a purification unit (23) is provided in the humidification units to purify and/or de-ionize the condensate water.

8. The fuel cell in accordance with claim 7, whereby the purification unit (23) is a demineralization cartridge.

9. A method for humidifying process gas for the operation of a fuel cell as defined in claim 1, where the gas containing O₂ for the cathode is humidified by the cathode waste gas containing water vapor through a first humidification unit and/or the fuel gas containing H₂ for the anode is humidified by the anode waste gas containing water vapor through the second humidification unit.

10. A method for humidifying process gas for the operation of a fuel cell as defined in claim 2, where the fuel gas containing H₂ for the anode is humidified by the cathode waste gas containing water vapor through a first humidification unit and/or the gas containing O₂ for the cathode is humidified by the anode waste gas containing water vapor through the second humidification unit.

## Revendications

1. Pile à combustible avec humidification intégrée, comprenant
une unité de piles à combustible (1) avec une anode (2), une membrane électrolyte en polymère (PEM) (3) et une cathode (4),
une conduite d'alimentation (5) pour du gaz contenant du O₂, de préférence de l'air, vers la cathode,
une conduite d'évacuation (6) pour le gaz d'échappement de la cathode contenant de la vapeur d'eau,
une conduite d'alimentation (7) pour le gaz de combustion contenant du H₂ vers l'anode,
une conduite d'évacuation (8) pour le gaz d'échappement de l'anode contenant de la vapeur d'eau,
une première unité d'humidification pour le gaz contenant du O₂ et/ou une deuxième unité d'humidification pour le gaz de combustion contenant du H₂, la première unité d'humidification comprenant
un premier échangeur de chaleur (9), par lequel la conduite d'alimentation (5) pour le gaz contenant du O₂ et la conduite d'évacuation (6) pour le gaz d'échappement de la cathode contenant de la vapeur d'eau sont guidées, la conduite d'évacuation (6) étant reliée en aval du premier échangeur de chaleur (9) à la conduite d'alimentation (5) en amont du premier échangeur de chaleur (9) par le biais d'un premier séparateur (10) et d'un premier tube capillaire (11) et le premier tube capillaire (11) débouchant dans une buse de Venturi (12) installée dans la conduite d'alimentation (5) et/ou dans une pompe (12) installée dans la conduite d'alimentation (5),
et/ou la deuxième unité d'humidification comprenant
un deuxième échangeur de chaleur (13), par lequel la conduite d'alimentation (7) pour le gaz de combustion contenant du H₂ et la conduite d'évacuation (8) pour le gaz d'échappement de l'anode contenant de la vapeur d'eau sont guidées, la conduite d'évacuation (8) étant reliée en aval du deuxième échangeur de chaleur (13) à la conduite d'alimentation (7) en amont du deuxième échangeur de chaleur (13) par le biais d'un deuxième séparateur (14) et d'un deuxième tube capillaire (15) et le deuxième tube capillaire (15) débouchant dans une buse de Venturi installée dans la conduite d'alimentation (7) et/ou dans une pompe (16) installée dans la conduite d'alimentation (7).

2. Pile à combustible avec humidification intégrée, comprenant
une unité de piles à combustible (1) avec une anode (2), une membrane électrolyte en polymère (PEM) (3) et une cathode (4),
une conduite d'alimentation (5) pour du gaz contenant du O₂, de préférence de l'air, vers la cathode,
une conduite d'évacuation (6) pour le gaz d'échappement de la cathode contenant de la vapeur d'eau,
une conduite d'alimentation (7) pour le gaz de combustion contenant du H₂ vers l'anode,
une conduite d'évacuation (8) pour le gaz d'échappement de l'anode contenant de la vapeur d'eau, une première unité d'humidification pour le gaz contenant du O₂ et/ou une deuxième unité d'humidification pour le gaz de combustion contenant du H₂, la première unité d'humidification comprenant
un premier échangeur de chaleur, par lequel la conduite d'alimentation (7) pour le gaz de combustion contenant du H₂ et la conduite d'évacuation (6) pour le gaz d'échappement de la cathode contenant de la vapeur d'eau sont guidées, la conduite d'évacuation (6) étant reliée en aval du premier échangeur de chaleur à la conduite d'alimentation (7) en amont du premier échangeur de chaleur par le biais d'un premier séparateur et d'un premier tube capillaire et le premier tube capillaire débouchant dans une buse de Venturi (16) installée dans la conduite d'alimentation (7) et/ou dans une pompe (16) installée dans la conduite d'alimentation (7),
et/ou la deuxième unité d'humidification comprenant
un deuxième échangeur de chaleur, par lequel la conduite d'alimentation (5) pour le gaz contenant du O₂ et la conduite d'évacuation (8) pour le gaz d'échappement de l'anode contenant de la vapeur d'eau sont guidées, la conduite d'évacuation (8) étant reliée en aval du deuxième échangeur de chaleur à la conduite d'alimentation (5) en amont du deuxième échangeur de chaleur par le biais d'un deuxième séparateur et d'un deuxième tube capillaire et le deuxième tube capillaire débouchant dans une buse de Venturi installée dans la conduite d'alimentation (5) et/ou dans une pompe (12) installée dans la conduite d'alimentation (5).

3. Pile à combustible selon la revendication 1 ou 2, comprenant en outre un circuit réfrigérant (17) relié à l'unité de piles à combustible (1) avec un échangeur de chaleur (18) et une pompe (19) en vue de la recirculation de réfrigérant.

4. Pile à combustible selon au moins l'une quelconque des revendications 1 à 3, l'unité de piles à combustible (1) étant un empilement de piles à combustible qui comprend une pluralité de piles individuelles à combustible.

5. Pile à combustible selon au moins l'une quelconque des revendications 1 à 4, les tubes capillaires (11, 15) présentant un diamètre intérieur de 0,2 à 10 mm, de préférence de 1 à 4 mm.

6. Pile à combustible selon au moins l'une quelconque des revendications 1 à 5, les unités d'humidification comprenant un dispositif de régulation (22) afin de pouvoir doser la quantité d'eau de condensation à amener aux conduites d'alimentation (5, 7).

7. Pile à combustible selon au moins l'une quelconque des revendications 1 à 6, une unité de nettoyage (23) étant prévue dans les unités d'humidification afin de nettoyer ou de désioniser l'eau de condensation.

8. Pile à combustible selon la revendication 7, l'unité de nettoyage (23) étant une cartouche de déminéralisation.

9. Procédé d'humidification de gaz de processus pour le fonctionnement d'une pile à combustible telle que définie dans la revendication 1, dans lequel le gaz contenant du O₂ pour la cathode est humidifié par le gaz d'échappement de la cathode contenant de la vapeur d'eau par le biais de la première unité d'humidification et/ou le gaz de combustion contenant du H₂ pour l'anode est humidifié par le gaz d'échappement de l'anode contenant de la vapeur d'eau par le biais de la deuxième unité d'humidification.

10. Procédé d'humidification de gaz de processus pour le fonctionnement d'une pile à combustible telle que définie dans la revendication 2, dans lequel le gaz de combustion contenant du H₂ pour l'anode est humidifié par le gaz d'échappement de la cathode contenant de la vapeur d'eau par le biais de la première unité d'humidification et/ou le gaz contenant du O₂ pour la cathode est humidifié par le gaz d'échappement de l'anode contenant de la vapeur d'eau par le biais de la deuxième unité d'humidification.
